# EUROPEAN PATENT SPECIFICATION

(11) **EP 0 225 720 B1**
(45) Date of publication and mention of the grant of the patent: **17.02.1993**
(21) Application number: 86308590.8
(22) Date of filing: 04.11.1986
(51) Int. Cl.: G06F 13/42

(54) **Integrated circuit devices**
Integrierte Schaltungen
Circuits intégrés

(30) Priority: 05.11.1985 JP 247551/85
(43) Date of publication of application: 16.06.1987
(73) Proprietor: SONY CORPORATION, Tokyo 141 (JP)
(72) Inventor: Shirota, Norihisa Sony Corp. Patents Division, Shinagawa-ku Tokyo 141 (JP); Takada, Shinji Sony Corp. Patents Division, Shinagawa-ku Tokyo 141 (JP); Yamagiwa, Kazuo Sony Corp. Patents Division, Shinagawa-ku Tokyo 141 (JP)
(74) Representative: Cotter, Ivan John

(56) References cited:
- IBM TECHNICAL DISCLOSURE BULLETIN, vol. 26, no. 6, November 1983, pages 3011-3017, IBM Corp., New York, US; C. WILLIAMS: "Narrow interface for peripheral adapters"
- COMPUTER TECHNOLOGY REVIEW, vol. V, no. 4, Fall 1985, pages 135-139, Los Angeles, CA, US; B. MILLER: "SPI provides solution to multiple processor interconnect problems"
- ELEKTRONIK, vol. 30, no. 7, 1981, pages 89-94, Munich, DE; R. KIND: "I2C-Bus; Verteilte Intelligenz auch in Geräten"

## Description

This invention relates to integrated circuit (IC) devices.

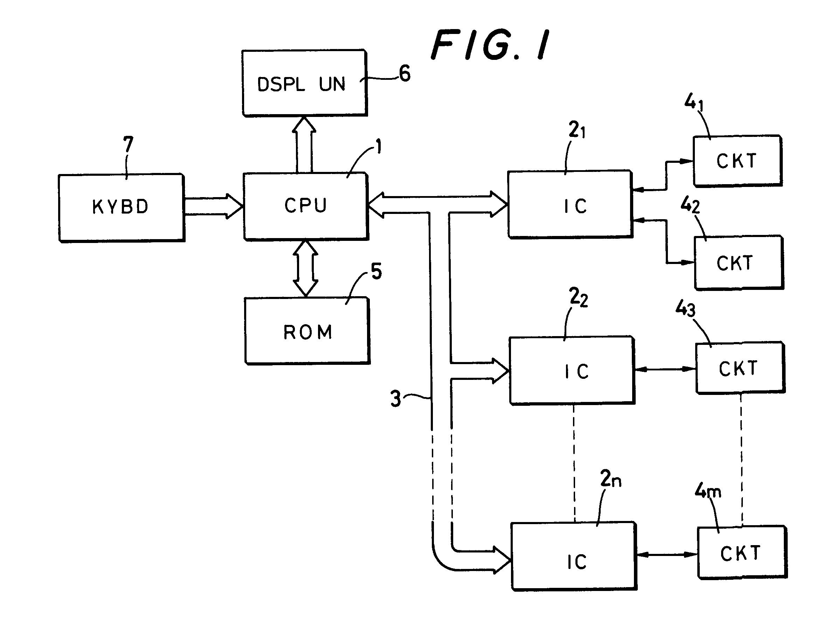

Most video and audio equipment (such as, for example, television receivers, video tape recorders (VTRs) and tape recorders) which have a digital circuit employ an inner bus system, for example as shown in Figure 1 of the accompanying drawings, in which a main central processing unit (CPU) 1 and a plurality of IC devices 2₁,2₂ ..... 2ₙ are connected to each other through a bus or bus line 3, and the IC devices 2₁,2₂ ..... 2ₙ are connected to control circuits 4₁,4₂, ..... 4ₘ. The IC devices 2₁ to 2ₙ fetch predetermined data from data supplied by the CPU 1, convert the fetched data from digital to analog form, and use the resulting analog signals to control the circuits 4₁ to 4ₘ. At the same time, the IC devices 2₁ to 2ₙ receive analog operation voltages from the circuits 4₁ to 4ₘ, convert the voltages from analog to digital form, and supply the resulting digital signals to the CPU 1. Thus, the IC devices 2₁ to 2ₙ function as a slave CPU.

In Elektronik, vol. 30, 1981, no. 7, p. 89-94, data transfer between a master and a slave unit is described. However, the claimed solution is not shown.

Further, as shown in Figure 1, a read only memory (ROM) 5 stores set values of the operation voltages of the circuits 4₁ to 4ₘ. In normal operation, data representing a set value is read from the ROM 5 by the CPU 1 and supplied to the IC devices 2 to 2ₙ through the bus 3, so that the circuits 4₁ and 4ₘ are controlled to perform predetermined operations while a display unit 6 provides a suitable display, for example an indication that such operations are being performed. The circuits 4₁ to 4ₘ are also externally controllable by manual actuation of a keyboard 7, or by a remote control system, through the CPU 1.

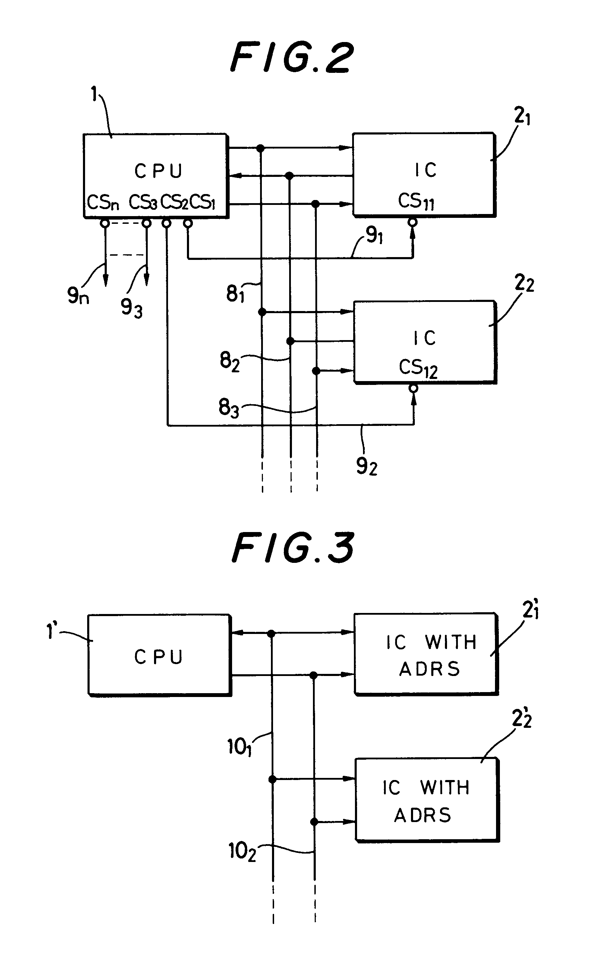

As shown in Figure 2 of the accompanying drawings, four-line type buses or bus lines usually have been used as the bus 3 in an inner bus system of the type shown in Figure 1. However, recently, two-line type buses or bus lines have been coming into use for that purpose, as shown in Figure 3 of the accompanying drawings.

More particularly, in the four-line type bus arrangement shown in Figure 2, the CPU 1 and the IC devices 2₁,2₂, ..... 2ₙ are connected in common through three lines 8₁,8₂, and 8₃. Chip select terminals CS₁,CS₂, ..... CSₙ of the CPU 1 and chip select terminals CS₁₁,CS₁₂,..... CS₁ₙ of the IC devices 2₁,2₂, ..... 2ₙ are connected to each other through lines 9₁,9₂, ..... 9ₙ, respectively. When the CPU 1 selectively communicates with the IC device 2₁, it supplies a chip select signal of a low ("L") level from the terminal CS₁ to the respective terminal CS₁₁, and a signal of a high ("H") level from the terminals CS₂, ..... CSₙ to the terminals CS₁₂, ..... CS₁ₙ of the other IC devices 2₂, ..... 2ₙ. The line 8₁ transmits data from the CPU 1 to the IC devices 2₁,2₂, ..... 2ₙ, the line 8₂ transmits data from the IC devices 2₁,2₂, ..... 2ₙ to the CPU 1, and the line 8₃ transmits a clock pulse signal from the CPU 1 to the IC devices 2₁,2₂, ..... 2ₙ. Shift registers (not shown) are provided in the IC devices 2₁,2₂, ..... 2ₙ. When a chip select signal is supplied to the IC devices 2₁,2₂, ..... 2ₙ for selecting one of those IC devices, data supplied from the CPU 1 through the line 8₁ is fetched by the shift registers of the selected IC device. The shift registers also supply data stored therein to the CPU 1 through the line 8₂.

Referring to Figure 3 of the accompanying drawings, it will be seen that when the two-line type bus is used in the arrangement of Figure 1, a CPU 1' and IC devices 2'₁,2'₂, ..... 2'ₙ are connected in common through two lines 10₁ and 10₂. In this case, the line 10₁ is used for alternately transmitting and receiving serial data between the CPU 1' and the IC devices 2'₁,2'₂, ..... 2'ₙ and the line 10₂ is used for transmitting a clock pulse signal. Specific addresses are assigned to the IC devices 2'₁,2'₂, ..... 2'ₙ, which selectively fetch the data when they detect their respective addresses in the data supplied from the CPU 1'. A communication system using the two-line type bus is disclosed in detail in Japanese Patent Application Publication No. 57-106262.

The two-line type bus is advantageous, as compared with the four-line type bus, in that it reduces the number of wires required. On the other hand, the four-line type bus can transmit a large amount of data within a short period of time; that is, the two-line type bus has a relatively slower transmission speed. Accordingly, the four-line type bus has been used for equipment, such as a VTR, which requires complex control functions, while the two-line type bus has been used in those applications where the controlled equipment, for example a television receiver, involves relatively simple control functions. In connection with the foregoing, it is to be noted that, in a VTR, various predetermined circuits, such as a timer circuit, a display circuit, a drive mechanism, a servo circuit, and the like, must be monitored sequentially and constantly within a one-field period of a video signal. It has been found that such monitoring and consequent control cannot be performed within a one-field period when using a two-line type bus by reason of the relatively slower transmission speed of that type of bus.

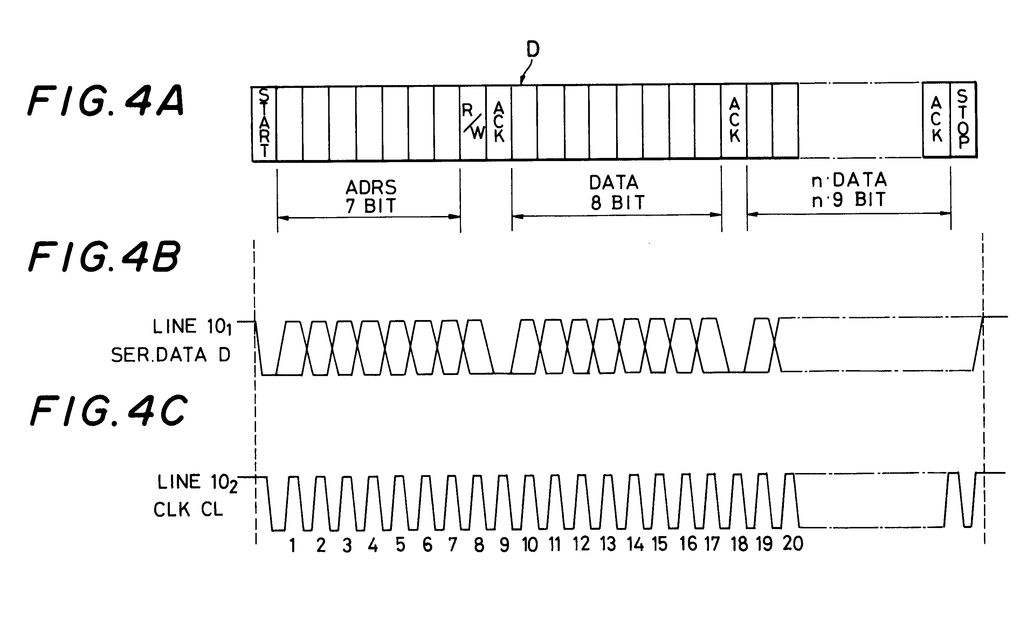

Referring now to Figures 4A to 4C of the accompanying drawings, which show the data format of the signals transmitted by the two-line type bus of Figure 3, it will be seen that the line 10₁ transmits serial data D (Figure 4B) and the other line 10₂ transmits a clock signal CL (Figure 4C). The data D is shown in Figure 4A as comprising a 1-bit start signal, a 7-bit address signal for designating the address assigned to one of the IC devices 2'₁,2'₂, ..... 2'ₙ, a 1-bit read/write (R/W) signal for determining whether to supply data to the designated IC device or to fetch data from the designated IC device, a 1-bit acknowledge (ACK) signal which is sent to the CPU 1' when it is confirmed that an IC device is designated and that such IC device has received data, an 8-bit data signal representing a control level or the like, n 9-bit data signals, and a 1-bit stop signal.

It will be appreciated that the IC devices 2₁,2₂, ..... 2ₙ used in connection with the four-line type bus of Figure 2 and the IC devices 2'₁,2'₂, ..... 2'ₙ used in connection with the two-line type bus of Figure 3 have different arrangements and thus generally are not compatible with each other. However, in order to realise the above-described advantages of both types of bus, it is sometimes desirable to use an IC device for the two-line type bus in a system using the four-line type bus. Further, it may be desirable to combine a VTR using a four-line type bus and a television receiver using a two-line type bus in a system which is controlled by a main CPU common to both the VTR and television receiver.

An article by Rainer Kind in Elektronik, Vol. 30 (1981), No. 7, pages 89 to 94 discloses an integrated circuit (IC) device comprising:
a first terminal for inputting data;
a second terminal for receiving a chip select signal;
a third terminal for receiving a clock pulse signal; and
a fourth terminal for outputting data.

The present invention, which is disclosed in claim 1, provides such an integrated circuit (IC) device, characterised by:
a first signal processor for receiving data supplied from the first terminal and outputting data to the first terminal or the fourth terminal;
a second signal processor for receiving data supplied from the first terminal and outputting data to the fourth terminal;
a controller for receiving data from the first or second signal processor and outputting the data to the first terminal or to the first or second signal processor; and
an enabling circuit for receiving said chip select signal and responsive thereto selectively to enable one of the first and second signal processors in accordance with the type of data inputted to the first terminal.

Preferred embodiments of the present invention described hereinbelow provide an IC device which can be used with both four-line and two-line type buses. Such an IC device can be used in a control system having a four-line type bus, wherein data having a format for a two-line type bus is transmitted, thereby allowing high-speed communication. Further, such an IC device can be used in a control system using a four-line type bus, together with an IC device for a two-line type bus, so that the number of wires can be decreased.

The preferred IC devices are compatible with input signals in formats for two-line and four-line type buses. The preferred IC devices are suitable for use in electronic equipment (such as, for example, television receivers, VTRs and tape recorders) having a digitally controlled internal circuit and are suitable as a CPU or a microprocessor having a communication line.

The invention will now be further described, by way of illustrative and non-limiting example, with reference to the accompanying drawings, in which corresponding parts or components are identified by the same references throughout, and in which:
Figure 1 is a block diagram of a previously proposed control system using an inner bus;
Figure 2 is a block diagram of a portion of the previously proposed control system when implemented using a four-line type bus;
Figure 3 is a block diagram of a portion of the previously proposed control system when implemented using a two-line type bus;
Figures 4A to 4C show a format for data transmitted by the two-line type bus of Figure 3;
Figure 5 is a block diagram of an IC device according to a first embodiment of the present invention;
Figure 6 is a block diagram of an IC device according to the second embodiment of the present invention;
Figure 7 is a block diagram of a control system using a four-line type bus and which incorporates an IC device embodying this invention and also a previously proposed two-line type IC device; and
Figure 8 is a flow chart showing operations of an IC device embodying the present invention.

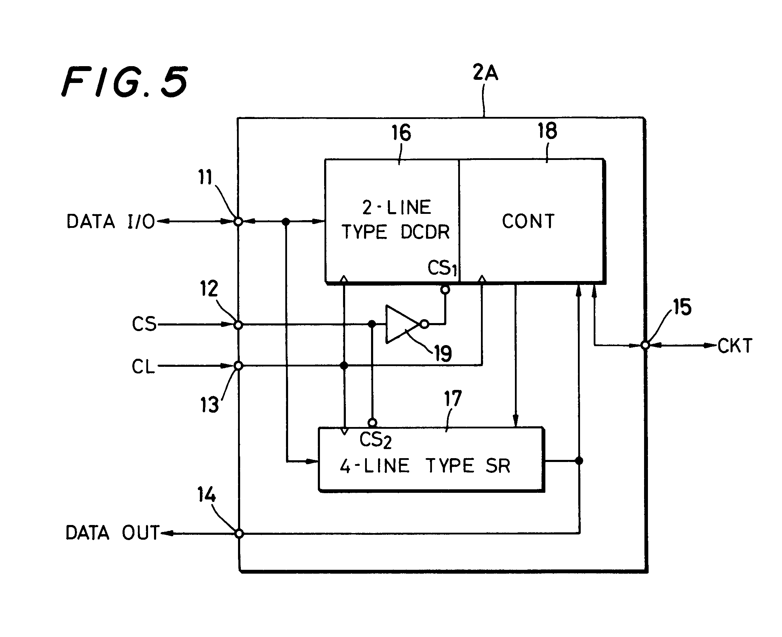

Figure 5 shows an IC device 2A, according to a first embodiment of the present invention, which is intended for incorporation in a control system using the four-line type bus described with reference to Figure 2. In this embodiment, the IC device 2A can operate even when a signal having a data format for the two-line type bus shown in Figure 4A is supplied from a main CPU 1 onto the bus.

The IC device 2A has a data input/output terminal 11, an input terminal 12 for a chip select signal CS, an input terminal 13 for a clock pulse signal CL, a data output terminal 14, and a connection terminal 15 for connection to a circuit to be controlled, for example any of the circuits 4₁ to 4ₘ shown in Figure 1. The IC device 2A includes a decoder 16 for a signal of a two-line type bus, a shift register 17 for a signal of a four-line type bus, a controller or control unit 18, and an inverter 19. The chip select signal CS applied to the terminal 12 is supplied therefrom directly to a chip select terminal CS₂ of the shift register 17 and, after being inverted by the inverter 19, is applied to a chip select terminal CS₁ of the decoder 16. Therefore, either the decoder 16 or the shift register 17 is selectively enabled by the chip select signal CS. In the first embodiment now being described, the IC device 2A is operated by a signal having a data format of the two-line type bus when the signal CS is at the high ("H") level, that is, the decoder 16 is enabled in response to the signal CS being at the "H" level.

The clock pulse signal CL applied to the terminal 13 is supplied therefrom to the decoder 16, the shift register 17, and the controller 18. The controller 18 generates a control signal which is outputted at the terminal 15 for controlling the controlled circuit 4₁ ...... 4ₘ on the basis of data supplied from the decoder 16 or the shift register 17. The controller 18 also receives an operation voltage from the controlled circuit 4₁ ..... 4ₘ through the terminal 15, and generates data corresponding to such operation voltage for output from the terminal 11 or for setting of such data in the shift register 17. The controller 18 may include a predetermined logic circuit and the like. It will be appreciated that a predetermined address is assigned to the IC device 2A.

With the above arrangement, when a signal CS of the low ("L") level is applied to the terminal 12, the shift register 17 is enabled and the decoder 16 is disabled, with the result that IC device 2A is set in a four-line type mode. With the IC device 2A in the four-line type mode, a signal for the four-line type bus is inputted to the terminal 11 from the main CPU, fetched by the shift register 17, and transferred to the controller 18 in response to the clock pulse signal CL. The controller 18 generates a control signal based on this signal for the four-line type bus and supplies the control signal through the terminal 15 in order to control the respective controlled circuit. The controller 18 also generates data corresponding to the operation voltage received from the controlled circuit through the terminal 15 and supplies that data to the shift register 17, as needed. This data corresponding to the operation voltage from the controlled circuit is read out by the clock pulse signal CL and is supplied to the main CPU through the terminal 14.

When a signal CS of the "H" level is applied to the terminal 12, the decoder 16 is enabled, and the shift register 17 is disabled, so that the IC device 2A is placed in a two-line type mode. Data having a two-line type data format, as shown in Figure 4A, is supplied to the terminal 11 from the main CPU and is applied therefrom to the decoder 16 together with the clock pulse signal CL. The decoder 16 fetches this data when it detects the respective address at the beginning thereof. The controller 18 generates a control signal based on the data fetched by the decoder 16 and supplies the control signal to the controlled circuit through the terminal 15. The controller 18 also generates data corresponding to the operation voltage of the controlled circuit received at the terminal 16 and sends the operation voltage data to the main CPU through the terminal 11, as needed.

As described above, the IC device 2A can be operated by a signal having the data format for a four-line type bus or a two-line type bus. When a plurality of the IC devices 2A are provided, they can be connected to the main CPU through a four-line type bus, as shown in Figure 2, so that a control system can be constituted. In such control system, addresses are assigned to the respective IC devices so that any one of the IC devices 2A to be controlled can also be selected in the two-line type mode. Alternatively, in the four-line type mode, any one of the IC devices 2A to be controlled can be selected by the chip select signal CS.

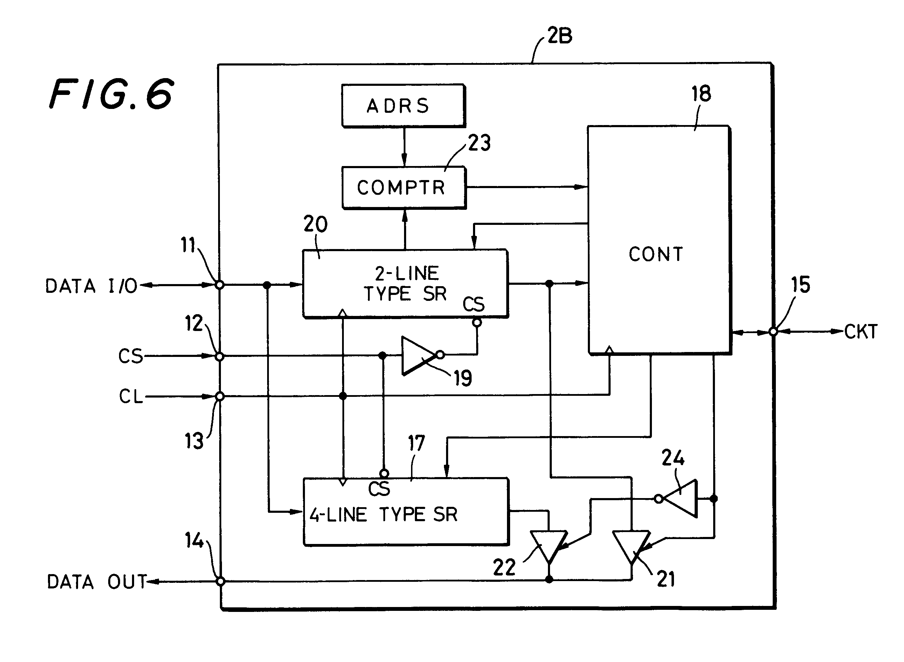

Figure 6 shows an IC device 2B according to a second embodiment of the present invention. In Figure 6, elements corresponding to those described with reference to Figure 5 are identified by the same references.

In the IC device 2A shown in Figure 5, the terminal 14 is not used in the two-line type mode so that one bus line is left unused. In contrast to the foregoing, even when the IC device 2B shown in Figure 6 is used in the two-line type mode, data is inputted from the terminal 11 and data is outputted from the terminal 14. For this purpose, a two-line type shift register 20 is provided as the signal processor of the data in the format of a two-line type bus, and output data therefrom is applied to the terminal 14 through a two-line type gate 21. Further, output data from the shift register 17 is applied to the terminal 14 through a four-line type gate 22. When the IC device 2B operates in the two-line type mode, the shift register 20 is enabled by the chip select signal CS at the "H" level through the inverter 19 and the shift register 17 is disabled. The address added to the data in the format of a two-line type bus input to the shift register 20 from the terminal 11 is compared in a comparator 23 with the address assigned to the IC device 2B. When coincidence is established in the comparator 23, the controller 18 outputs a gate signal in response to the coincidence signal. The gate signal enables the gate 21 and disables the gate 22 through an inverter 24. Then, the shift register 20 can send the data, received from the controller 18, to the CPU through the gate 21 and the terminal 14.

When the chip select signal CS is set at the "L" level so that the IC device 2B is set in the four-line type mode, the shift register 17 is enabled and the gates 21 and 22 are disabled and enabled, respectively, so that data outputted from the shift register 17 is supplied through the terminal 14 to the main CPU.

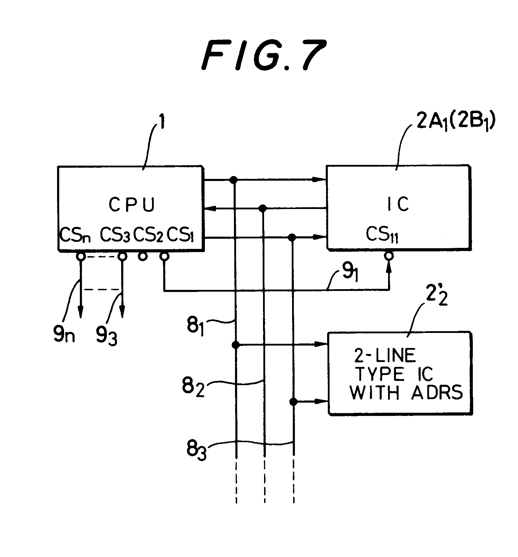

When a plurality of the IC devices 2A or 2B embodying the invention are used to constitute a control system as shown in Figure 1 with a four-line type bus, previously proposed IC devices of a type intended for a two-line type bus (Figure 3) often are also included, for example as shown at 2'₂ in Figure 7.

The IC device 2'₂ for the two-line type bus as used in Figure 7 may be of the type described with reference to Figure 3. The other IC devices 2A₁ or 2B₁ may be of the kind described with reference to Figure 5 or 6. The IC device 2'₂ is shown connected to a data input/output line 8₁ and a clock line 8₃, and is not connected to a data output line 8₂. Since no chip select terminal is provided on the IC device 2'₂, no chip select signal is supplied thereto from the CPU 1. Therefore, the IC device 2'₂ communicates with the CPU 1 when its respective identifying address is designated by the CPU 1. However, when the bus is used in the four-line type mode, the IC device 2'₂ cannot detect that fact since chip selection is not performed with respect to the IC device 2'₂. As a result, the IC device 2'₂ may erroneously output a signal at an arbitrary time when another IC device communicates with the CPU 1. If such an erroneous output signal is supplied from the IC device 2'₂ to the line 8₁, it is mixed with a signal from another IC device which is intended to be operative, thus interfering with communication.

In order to solve this problem, a specific code, for example the code "0000010", may be provided as the 7-bit address signal in the format for the data D shown in Figure 4 whenever a signal having a data format for a type of bus other than the two-line type bus is to be supplied. In such case, the IC device 2'₂ detects the specific address "0000010" and is made inoperative in response thereto. On the other hand, the IC device 2A or 2B is set in the four-line type mode in response to the chip selection signal CS supplied thereto after the address or code "0000010" is detected. Of course, an address or code other than "0000010" can be used as the specific address or code for deactivating each previously proposed or two-line type IC device included in the system of Figure 7.

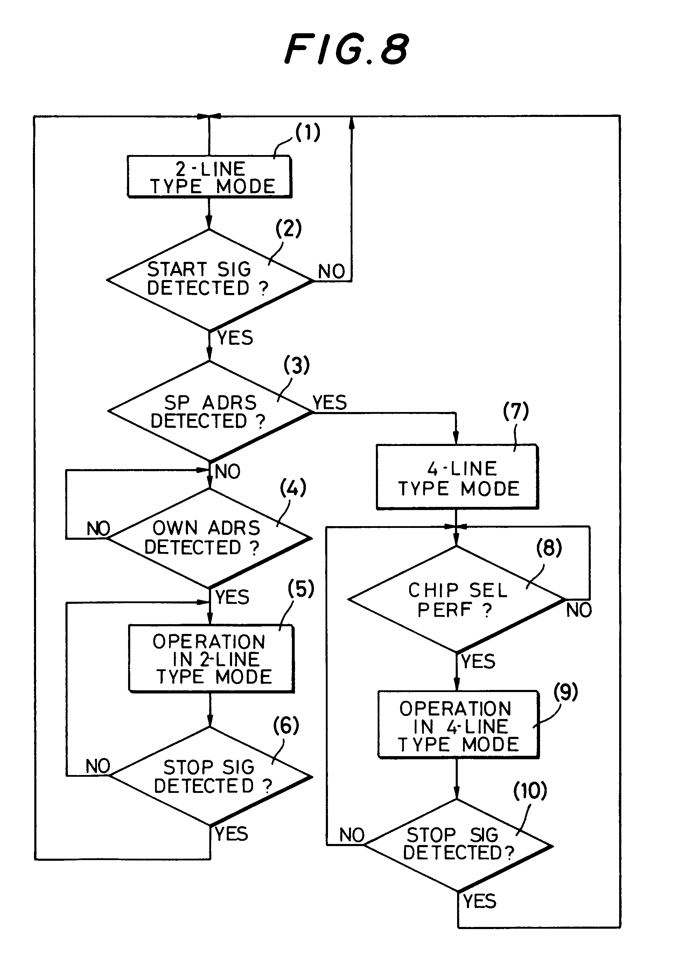

The operation of an IC device 2A or 2B embodying this invention in the control system of Figure 7 will now be described with reference to Figure 8 for the case where the special code or address "0000010" is used to render inoperative any other IC devices in the system intended for operation only in the two-line type mode.

First, assume that the two-line type mode is set in a step (1), and the IC device 2A or 2B awaits a start signal in a step (2). When the start signal is detected, a check is made in a step (3) to determine whether the specific code or address "0000010" is present. If the code "0000010" is not detected in the step (3), that is the input data is in the format for a two-line type bus, the flow advances to a step (4) to check if the address of the respective IC device 2A or 2B is received. If the respective address is detected in the step (4), the IC device 2A or 2B performs a respective operation in the two-line type mode in a step (5). When a stop signal is detected in a step (6), the communication ends and the flow returns to the step (1).

If the special address or code "0000010" is detected in the step (3), the flow advances to a step (7) to set the IC device 2A or 2B in the four-line type mode, and then a check is made in a step (8) to determine whether chip selection is performed. If chip selection occurs in the step (8), the respective operation is performed in the four-line type mode in a step (9). Then, a check is made in a step (10) to determine whether a stop signal is detected. If a stop signal is detected in the step (10), the communication ends and the flow returns to the step (1).

It will be appreciated that either four-line or two-line type buses can be employed with a common IC device embodying this invention. When an IC device embodying the invention is incorporated in a control system using a four-line type bus and data having the format for a two-line type bus is transmitted, relatively high-speed communication is possible. In the case of a VTR, when a previously proposed two-line type bus is used, the time required for monitoring and controlling the various circuits, such as the timer, display, drive and servo circuits, exceeds one-field period (16.7 ms in a 60 fields per second type of system). However, when a four-line type bus is used, this control time can be reduced to 3 ms, which is well within the one-field period. Thus, other control functions can be performed utilising the time made available by this time reduction. When a two-line type IC device is present in a system using a four-line type bus, a chip select line extending between the CPU and the IC device can be omitted, thereby reducing the number of wires required.

## Claims

1. An integrated circuit (IC) device (2A or 2B) comprising:
a first terminal (11) for inputting data;
a second terminal (12) for receiving a chip select signal (CS);
a third terminal (13) for receiving a clock pulse signal (CL); and
a fourth terminal (14) for outputting data;
the integrated circuit device (2A or 2B) being characterised by:
a first signal processor (16 or 20) for receiving data supplied from the first terminal (11) and outputting data to the first terminal (11) or the fourth terminal (14);
a second signal processor (17) for receiving data supplied from the first terminal (11) and outputting data to the fourth terminal (14);
a controller (18) for receiving data from the first or second signal processor (16 or 20,17) and outputting the data to the first terminal (11) or to the first or second signal processor (20,17); and
an enabling circuit (19 or 19,21,22,24) for receiving said chip select signal (CS) and responsive thereto selectively to enable one of the first and second signal processors (16 or 20,17) in accordance with the type of data inputted to the first terminal (11).

2. A device according to claim 1, in which the first signal processor (16) includes a detector for detecting an address signal included in data inputted to the first terminal (11).

3. A device according to claim 1 or claim 2, so arranged that data outputted from the controller (18) is supplied to the fourth terminal (11) through the first signal processor (16).

4. A device according to claim 3, in which the first signal processor includes a decoder (16).

5. A device according to claim 4, in which the second signal processor includes a shift register (17).

6. A device according to claim 1, in which the first and second signal processors include first and second shift registers (20,17), respectively.

7. A device according to claim 6, so arranged that data outputted from the controller (18) is supplied to the fourth terminal (14) through the first and second shift registers (20,17), respectively.

8. A device according to claim 7, in which the enabling circuit (19,21,22,24) comprises gates (21,22) provided between outputs of the first and second shift registers (20,17) and the fourth terminal (14), and in which the controller (18) is operative selectively to open the gates (21,22) in accordance with the type of data.

9. A device according to any one of claims 1 and 6 to 8, in which a detector (23) is provided for detecting a specific address (0000010) included in the data inputted to the first terminal (11), and in which the second signal processor (17) is arranged to be operated by the chip select signal (CS) when the specific address (0000010) is detected.

10. A device according to claim 9, which is connected to a system in which the specific address (0000010) is incorporated in a data format (Figure 4A) of a signal transmitted by a two-line type bus.

11. A device according to any one of the preceding claims, in which a fifth terminal (15) is provided for connection to an external circuit (4₁, ..... 4ₘ), and in which the controller (18) is operative to supply a control signal to the external circuit through the fifth terminal.

12. A device according to claim 11, in which the controller (18) is operative to receive a signal from the external circuit (4₁, ..... 4ₘ) through the fifth terminal (15).

## Patentansprüche

1. Integrierte Schaltung (2A oder 2B) mit
einem ersten Anschluß (11) für die Bingabe von Daten,
einem zweiten Anschluß (12) für den Empfang eines Bausteinauswahlsignals (CS),
einem dritten Anschluß (13) für den Empfang eines Taktimpulssignals (CL), und
einem vierten Anschluß (14) für die Ausgabe von Daten,
wobei die integrierte Schaltung (2A oder 2B) gekennzeichnet ist durch
einen ersten Signalprozessor (16 oder 20) für den Empfang von Daten, die von dem ersten Anschluß (11) geliefert werden, und für das Ausgeben von Daten an den ersten Anschluß (11) oder den vierten Anschluß (14),
einen zweiten Signalprozessor (17) für den Empfang von Daten, die von dem ersten Anschluß (11) geliefert werden, und für die Ausgabe von Daten an den vierten Anschluß (14),
einen Controller (18) für den Empfang von Daten von dem ersten oder zweiten Signalprozessor (16 oder 20, 17) und für die Ausgabe der Daten an den ersten Anschluß (11) oder an den ersten oder zweiten Signalprozessor (20, 17), und
eine Freigabeschaltung (19 oder 19, 21, 22, 24) für den Empfang des genannten Bausteinauswahlsignals (CS) und darauf ansprechend für die selektive Freigabe eines der ersten und zweiten Signalprozessoren (16 oder 20, 17) in Übereinstimmung mit der Art der am ersten Anschluß (11) eingegebenen Daten.

2. Schaltung nach Anspruch 1, in welcher der erste Signalprozessor (16) einen Detektor zur Detektion eines Adressensignals enthält, das in den am ersten Anschluß (11) eingegebenen Daten enthalten ist.

3. Schaltung nach Anspruch 1 oder 2, welche so ausgeführt ist, daß die vom Controller (18) ausgegebenen Daten dem vierten Anschluß (14) über den ersten Signalprozessor (16) zugeführt werden.

4. Schaltung nach Anspruch 3, in welcher der erste Signalprozessor einen Decoder (16) enthält.

5. Schaltung nach Anspruch 4, in welcher der zweite Signalprozessor ein Schieberegister (17) enthält.

6. Schaltung nach Anspruch 1, in welcher der erste und zweite Signalprozessor jeweils erste und zweite Schieberegister (20, 17) enthalten.

7. Schaltung nach Anspruch 6, welche so ausgeführt ist, daß die von dem Controller (18) ausgegebenen Daten dem vierten Anschluß (14) jeweils über die ersten und zweiten Schieberegister (20, 17) zugeführt werden.

8. Schaltung nach Anspruch 7, in welcher die Freigabeschaltung (19, 21, 22, 24) Gatterschaltungen (21, 22) aufweist, die zwischen den Ausgängen der ersten und zweiten Schieberegister (20, 17) und dem vierten Anschluß (14) angeordnet sind, und in welcher der Controller (18) ein selektives Öffnen der Gatterschaltungen (21, 22) in Übereinstimmung mit der Art der Daten bewirkt.

9. Schaltung nach einem der Ansprüche 1 und 6 bis 8, in welcher ein Detektor (23) zur Detektion einer spezifischen Adresse (0000010) vorgesehen ist, die in den am ersten Anschluß (11) eingegebenen Daten enthalten ist, und in welcher der zweite Signalprozessor (17) so eingerichtet ist, daß er durch das Bausteinauswahlsignal (CS) wirksam geschaltet wird, wenn die spezielle Adresse (0000010) detektiert wird.

10. Schaltung nach Anspruch 9, welche mit einem System verbunden ist, in dem die spezielle Adresse (0000010) in einem Datenformat (FIG 4A) eines Signals eingeschrieben ist, das über einen zwei Leitungen aufweisenden Bus übertragen wird.

11. Schaltung nach einem der vorhergehenden Ansprüche, in welcher ein fünfter Anschluß (15) für die Verbindung mit einer externen Schaltung (4₁, ..., 4ₘ) vorgesehen ist, und in welcher der Controller (18) dazu dient, ein Steuersignal an die externe Schaltung über den fünften Anschluß zu liefern.

12. Schaltung nach Anspruch 11, in welcher der Controller (18) dazu dient, ein Signal von der externen Schaltung (4₁, ..., 4ₘ) über den fünften Anschluß zu empfangen.

## Revendications

1. Dispositif de circuit intégré (IC) (2A ou 2B) comprenant :
une première borne (11) pour entrer des données ;
une seconde borne (12) pour recevoir un signal de sélection de puce (CS) ;
une troisième borne (13) pour recevoir un signal d'impulsion d'horloge (CL) ; et
une quatrième borne (14) pour émettre en sortie des données ;
le dispositif de circuit intégré (2A ou 2B) étant caractérisé par :
un premier processeur de signal (16 ou 20) pour recevoir des données appliquées depuis la première borne (11) et pour émettre en sortie des données sur la première borne (11) ou sur la quatrième borne (14) ;
un second processeur de signal (17) pour recevoir des données appliquées depuis la première borne (11) et pour émettre en sortie des données sur la quatrième borne (14) ;
un contrôleur (18) pour recevoir des données en provenance du premier ou second processeur de signal (16 ou 20, 17) et pour émettre en sortie les données sur la première borne (11) ou sur le premier ou second processeur de signal (20, 17) ; et
un circuit de validation (19 ou 19, 21, 22, 24) qui reçoit ledit signal de sélection de puce (CS) et qui lui est sensible pour valider de façon sélective l'un des premier et second processeurs de signal (16 ou 20, 17) en relation avec le type de données entrées sur la première borne (11).

2. Dispositif selon la revendication 1, dans lequel le premier processeur de signal (16) inclut un détecteur pour détecter un signal d'adresse inclus dans des données entrées sur la première borne (11).

3. Dispositif selon la revendication 1 ou 2, agencé de telle sorte que des données émises en sortie depuis le contrôleur (18) soient appliquées sur la quatrième borne (11) au travers du premier processeur de signal (16).

4. Dispositif selon la revendication 3, dans lequel le premier processeur de signal inclut un décodeur (16).

5. Dispositif selon la revendication 4, dans lequel le second processeur de signal inclut un registre à décalage (17).

6. Dispositif selon la revendication 1, dans lequel les premier et second processeurs de signal incluent respectivement des premier et second registres à décalage (20, 17).

7. Dispositif selon la revendication 6, agencé de telle sorte que des données émises en sortie depuis le contrôleur (18) soient respectivement appliquées sur la quatrième borne (14) au travers des premier et second registres à décalage (20, 17).

8. Dispositif selon la revendication 7, dans lequel le circuit de validation (19, 21, 22, 24) comprend des portes (21, 22) prévues entre des sorties des premier et second registres à décalage (20, 17) et la quatrième borne (14) et dans lequel le contrôleur (18) fonctionne de façon sélective pour ouvrir les portes (21, 22) en relation avec le type de données.

9. Dispositif selon l'une quelconque des revendications 1 et 6 à 8, dans lequel un détecteur (23) est prévu pour détecter une adresse spécifique (0000010) incluse dans les données entrées sur la première borne (11) et dans lequel le second processeur de signal (17) est agencé pour être actionné par le signal de sélection de puce (CS) lorsque l'adresse spécifique (0000010) est détectée.

10. Dispositif selon la revendication 9, qui est connecté à un système dans lequel l'adresse spécifique (0000010) est incorporée selon un format de données (figure 4A) d'un signal transmis par un bus du type à deux lignes.

11. Dispositif selon l'une quelconque des revendications précédentes, dans lequel une cinquième borne (15) est prévue pour assurer la connexion à un circuit externe (4₁,..., 4ₘ) et dans lequel le contrôleur (18) fonctionne pour appliquer un signal de commande au circuit interne au travers de la cinquième borne.

12. Dispositif selon la revendication 11, dans lequel le contrôleur (18) fonctionne pour recevoir un signal en provenance du circuit externe (4₁,..., 4ₘ) au travers de la cinquième borne (15).
